# EUROPEAN PATENT APPLICATION

(11) **EP 4 559 668 A1**
(43) Date of publication of application: **28.05.2025**
(21) Application number: 23871013.1
(22) Date of filing: 28.09.2023
(51) Int. Cl.: B29D 30/06, B29C 33/30

(54) **TIRE CURING PRESS**

(30) Priority: 28.09.2022 CN 202211186996; 20.07.2023 CN 202310891757
(71) Applicant: Himile CNC Machine Tool (Shandong) Co., Ltd., Shandong 261500 (CN)
(72) Inventor: FANG, Qiang, Weifang, Shandong 261500 (CN); SUN, Riwen, Weifang, Shandong 261500 (CN); CONG, Menghu, Weifang, Shandong 261500 (CN); LI, Lechang, Weifang, Shandong 261500 (CN); ZHANG, Wei, Weifang, Shandong 261500 (CN); WANG, Keqin, Weifang, Shandong 261500 (CN); JI, Songjiang, Weifang, Shandong 261500 (CN); ZHANG, Kai, Weifang, Shandong 261500 (CN); WANG, Wenguang, Weifang, Shandong 261500 (CN)
(74) Representative: Taylor, Gail
(86) International application number: PCT/CN2023/122489
(87) International publication number: WO 2024/067788

(57) **Abstract**

Disclosed is a tire curing press. The tire curing press includes: a curing bladder; a lower clamping assembly for clamping a lower flange of the curing bladder; and an upper clamping assembly for clamping an upper flange of the curing bladder. An upper end of a center rod is fixedly connected to the upper clamping assembly, and the center rod is capable of a lifting motion in a longitudinal direction relative to the lower clamping assembly. The tire curing press further includes a heating component, an stirring component, and a rotary driving member. The tire curing press further includes a rotating cylinder rotatably arranged to pass through a bore of a ring seat, where one end of the rotating cylinder projects from one side of the ring seat and is connected to the stirring component, the other end of the rotating cylinder projects from the other side of the ring seat and has a stator assembly fixed to the periphery thereof. The center rod extends through the interior of the rotating cylinder. In the tire curing press, the rotating cylinder encompasses the center rod, such that a high-temperature high-pressure medium can be isolated in the rotating cylinder, thereby reducing or even eliminating the influence of the high-temperature high-pressure medium on the rotary driving member.

## Description

### TECHNICAL FIELD

The present application relates to the field of tire manufacturing, and particularly to a tire curing press, especially to a medium stirring device in the press.

### Background

The curing process is now being used widely in industrial production and can be used to improve the overall hardness of a material. In the field of tire manufacturing, particularly, a tire casing needs to be treated by curing, so as to cure viscoelastic plastic rubber to form a usable finished tire.

The conventional tire curing process usually uses a combination of saturated steam and nitrogen for curing. The curing process is as follows: first, an uncured green tire is placed between a sealed curing bladder and a curing mold; then, saturated steam, which can provide heat required by curing, is introduced into the bladder; and next, high-pressure nitrogen is introduced to provide pressure required by curing. By means of the heat of the saturated steam and the pressure of the high-pressure nitrogen, the curing bladder dilates to compress and heat the green tire, thereby molding and curing the green tire.

One of the problems occurring during operation of the steam curing press is that the steam entering the curing bladder may condense and then condensed water may accumulates at a lower portion of the curing bladder, resulting in a large temperature difference between upper and lower portions of the curing bladder, which may in turn affect the tire curing effect. Moreover, in order to supply steam to the curing bladder, it is necessary to arrange steam pipeline(s), which occupies a large space.

There is also an electrical curing press in the prior art, which includes a heating assembly, a power assembly, etc. The power component includes a component, such as a motor, which drives a fan component to rotate, thus realizing flowing of a heating medium, such as nitrogen, in the curing bladder. One of the problems of the existing electric curing press is that the component of the curing press, particularly a driving mechanism such as the motor, is susceptible to the high-temperature, high-pressure medium in the curing bladder, resulting in a shortened service life of the component.

Therefore, in the field of tire manufacturing, there is a need to further improve the curing press to overcome the problems of the existing curing presses described above.

### SUMMARY

The present application is made to solve the problems in the prior art described above. The purpose of the present application is to provide a tire curing press, which is capable of solving the problem of a shortened service life of component(s) such as a motor, due to the influence of high-temperature, high-pressure gas in the prior art.

The present application provides a tire curing press, including:
a curing bladder;
a lower clamping assembly for clamping a lower flange of the curing bladder; an upper clamping assembly for clamping an upper flange of the curing bladder;
and a center rod, where an upper end of the center rod is fixedly connected to the upper clamping assembly, and the center rod is configured to be capable of a lifting motion in a longitudinal direction relative to the lower clamping assembly;
a heating component for heating a gas;
an stirring component for stirring the gas heated in the curing bladder;
a rotary driving member including a stator assembly and a rotor, where the stator assembly includes a bore, and a portion of the rotor is located in the bore of the stator assembly and faces an inner side of the stator assembly; and
a ring seat, where the lower clamping assembly is fixedly mounted on the periphery of the ring seat, and the ring seat includes a bore. Wherein, the curing bladder, the upper clamping assembly, the lower clamping assembly, and an upper surface of the ring seat jointly define a curing medium chamber for accommodating a gas medium.

The tire curing press further includes a rotating cylinder, where the rotating cylinder is rotatably disposed through the bore of the ring seat, one end of the rotating cylinder projects from one side of the ring seat and is connected to the stirring component, the other end of the rotating cylinder projects from the other side of the ring seat and has the stator assembly fixed to the periphery thereof, the center rod extends through the interior of the rotating cylinder, the upper end of the center rod is fixedly connected to the upper clamping assembly, and is configured to be capable of a lifting motion in the longitudinal direction relative to the lower clamping assembly.

In the tire curing press abovementioned, the rotating cylinder encompasses the center rod, so that the center rod is enclosed in a sealed environment, thus a high-temperature, high-pressure medium from the curing medium chamber can be isolated in the rotating cylinder. As such, the influence of the high-temperature, high-pressure medium on the rotary driving member can be reduced or even eliminated.

Preferably, one end of the stator assembly is directly or indirectly connected to the ring seat in a sealed manner, and the other end of the stator assembly is directly or indirectly connected to an end of the center rod away from the curing medium chamber in a sealed manner. Therefore, the stator assembly, in particular the stator thereof formed by a solenoid coil, is further isolated from the high-temperature, high-pressure medium.

Specifically, the tire curing press is provided therein with: a first gap formed between the rotating cylinder and the center rod, where an upper end of the first gap is in communication with the curing medium chamber; a second gap formed between the rotating cylinder and the ring seat, where an upper end of the second gap is in communication with the curing medium chamber, and a lower end of the second gap is in communication with a lower end of the first gap, thereby forming a U-shaped channel. Wherein, a first seal is provided between the stator assembly and the ring seat; and a second seal is provided between the stator assembly and the center rod. Therefore, the first seal and the second seal can seal the high-temperature, high-pressure medium from the curing medium chamber in the U-shaped channel formed by the first gap and the second gap, to prevent it from affecting components such as the stator assembly.

Preferably, the stator assembly includes the stator housing and a stator, the stator housing including a base, an end cap, and a housing between the base and the end cap; a ring cylinder is provided between the stator housing and the ring seat, and the ring cylinder is provided on the periphery of the rotating cylinder; wherein the first seal is provided between an upper end of the ring cylinder and the ring seat and between a lower end of the ring cylinder and the end cap.

Further preferably, the tire curing press further includes a support, where the support is located below the stator housing, and the second seal is provided between the base and the support.

In addition to the first seal and the second seal, other seals may also be provided in the tire curing press. For example, a ring cylinder is provided between the stator housing and the ring seat, the ring cylinder being provided on the periphery of the rotating cylinder; then the tire curing press further includes at least one of the following sealing structures: a third seal provided between the ring seat and an upper end of the rotating cylinder; a fourth seal provided between an upper end of the ring cylinder and the rotating cylinder; and a fifth seal provided between the stator assembly and the rotating cylinder.

The third seal helps to prevent the high-temperature, high-pressure medium in the curing medium chamber from entering a space between the ring seat and the rotating cylinder and thereby affecting a bearing therein. The fourth seal helps to prevent a leakage of grease of the bearing between the ring seat and the rotating cylinder. The fifth seal helps to prevent a leakage of grease of the bearing located at a lower end of the rotating cylinder.

Preferably, the tire curing press includes a guide device, where the guide device includes:
a guide driving member;
a first fixing seat adapted to be sleeved on a first end of the outer side of the center rod and adapted to be connected to the guide driving member; and
a second fixing seat adapted to be sleeved on a second end of the outer side of the center rod, a guide frame is mounted on the second fixing seat, a guide hole is provided on the guide frame, the guide hole is arranged coaxially with the center rod, and a guide member is provided in the guide hole. The center rod and the rotating cylinder of the tire curing press are also included in the guide device, and the center rod is connected to the guide driving member.

Further preferably, an inner diameter of the rotating cylinder is a, an outer diameter of the center rod is b, then a > b.

Preferably, the guide device further includes a transmission sleeve and a support bearing, the transmission sleeve is provided between the first fixing seat and the center rod, the rotary driving member includes a motor, and the transmission sleeve is connected to the motor and the rotating cylinder; there are a plurality of support bearings, the plurality of support bearings are respectively provided at upper and lower sides of the motor, the support bearing is sleeved on the transmission sleeve, a fixed race of the support bearing is connected to the first fixing seat, and a movable race of the support bearing is connected to the transmission sleeve.

Preferably, the transmission sleeve is fixed to the rotating cylinder by a snap-fit structure.

Preferably, the heating component is positioned above the second fixing seat; an upper end of the rotating cylinder passes through the second fixing seat, and the stirring component used is provided at the upper end of the rotating cylinder, for turbulating heat generated by the heating component.

Preferably, the guide frame includes a mounting disk provided with a ventilation hole.

Preferably, the tire curing press includes an integrated medium stirring device supported on a support of the tire curing press, the integrated medium stirring device including the heating component, the stirring component, and the rotary driving member, wherein one end of the rotor is rotatably provided in the bore of the ring seat and is fixedly connected to the stirring component through the bore of the ring seat, and the heating component and the stirring component are mounted on the ring seat; the stator assembly is fixedly provided on at least one of the support and the ring seat, and the stator assembly is positioned below the bottom of the ring seat, thereby isolating the stator assembly from the heated gas via the ring seat.

By means of the structure of the integrated medium stirring device, the heating component, the stirring component, and the motor assembly can be integrated together, to reduce the overall size of the device, which facilitates in the miniaturization of the tire curing press. Moreover, the rotor of the motor assembly can be directly connected to the stirring component, thereby substantially reducing a transmission distance, improving power transmission efficiency. Meanwhile, as the stator is positioned below the bottom of the ring seat, the stator is isolated from the gas heated by the heating component, thus protecting the stator from the heated gas.

Preferably, a bearing is provided between the rotor and the ring seat, which may facilitate in relative rotation motion of the rotor.

Preferably, the integrated medium stirring device further includes a housing provided on the outer side of the stator. In a specific structure, an upper end of the housing is fixedly connected to the bottom of the ring seat, and a lower end of the housing is detachably connected to the support, the detachable connection is achieved, for example, by means of a flange structure.

Preferably, a heat insulating member is provided between the housing and the ring seat. The heat insulating member can attenuate or even prevent downward transfer of heat in a curing space, thereby reducing a heat loss, i.e., reducing energy consumption.

Preferably, the tire curing press further includes a sealing cylinder located between the rotor and the stator assembly of the motor assembly, which can effectively isolate an internal medium of the tire curing press, such as pressurized nitrogen in the curing bladder, from the external environment, which on the one hand, prevents the internal medium of the tire curing press from being contaminated, and on the other hand, protects the stator of the motor assembly from being affected by the high-temperature, high-pressure internal medium.

Preferably, an upper end of the sealing cylinder is connected to the ring seat in a sealed manner, and a lower end of the sealing cylinder is connected to the support in a sealed manner. For example, a first seal is provided between an upper end of the sealing cylinder and the ring seat, and a second seal is provided between a lower end of the sealing cylinder and the support.

Further preferably, a compression ring is provided at an upper end of the ring seat, the tire curing press further includes: a sixth seal provided between the outer surface of the ring seat and the lower clamping assembly; and/or a seventh seal provided between the center rod and the compression ring.

To ensure proper operation of the motor, the sealing cylinder may be made of one of the following materials: carbon steel, stainless steel, ceramic, engineering plastics, and carbon fiber.

Preferably, the thickness of at least a portion of the sealing cylinder sandwiched between the rotor and the stator is in the range of 0.5 to 2 mm. This thickness range may help to further ensure proper operation of the motor assembly.

In the case of no sealing cylinder provided, a first seal may be provided between the stator housing and the ring seat, and a second seal may be provided between the stator housing and the support.

Alternatively, a first seal may be provided between the stator housing and the ring seat. Meanwhile, a sealing ring is provided between a top end of the support and the center rod, and an eighth seal is provided between the inner surface of the sealing ring and the center rod and/or between the outer surface of the sealing ring and the support.

### BRIEF DESCRIPTION OF THE DRAWINGS

Detailed embodiments of the present application can be more clearly understood from the structures shown in the drawings. In the drawings:
FIG. 1 illustrates a sectional view of a tire curing press according to a first embodiment of the present application.
FIG. 2 illustrates a partially enlarged view of a portion of the tire curing press in FIG. 1 including a rotary driving member.
FIG. 3 illustrates a partially enlarged view of a portion of the tire curing press in FIG. 1 including a ring seat, an stirring component, and a heat source.
FIG. 4 illustrates a perspective view of a guide frame of the tire curing press in FIG. 1.
FIG. 5 illustrates a sectional view of a tire curing press according to a second embodiment of the present application.
FIG. 6 illustrates a sectional view of a tire curing press according to a third embodiment of the present application.
FIG. 7 illustrates a partially enlarged view of an integrated medium stirring device of the tire curing press in FIG. 6.
FIG. 8 illustrates a sectional view of an integrated medium stirring device of a tire curing press according to a fourth embodiment of the present application.
FIG. 9 illustrates a sectional view of an integrated medium stirring device of a tire curing press according to a fifth embodiment of the present application.

### Description of reference numerals:

100-tire curing press; 110-curing bladder; 111-guide driving member; 112-center rod; 113-lower clamping assembly; 114-upper clamping assembly; 115-tire mold; 120-first fixing seat; 121-mounting groove; 122-base; 123-end cap; 124-housing; 125-ring cylinder; 130-second fixing seat; 140- guide frame; 141-guide member; 142-mounting disk; 143-ventilation hole; 150-rotating cylinder; 152-stirring component; 160-rotary driving member; 161-rotor; 162-stator; 153-first gap; 154-second gap; 170-transmission sleeve; 171-first seal; 172-second seal; 173-third seal; 174-fourth seal; 175-fifth seal; 180-support bearing; 181-support; 191-heat source;
200-tire curing press; 222-base; 223-end cap; 224-housing; 226-sealing cylinder; 261-rotor; 262-stator; 276-first seal; 277-second seal;
300-tire curing press; 310-integrated medium stirring device; 311-curing bladder; 312-lower clamping assembly; 313-upper clamping assembly; 314-center rod; 315-support; 316-first flange; 320-curing mold; 321-upper mold; 322-lower mold; 330-motor assembly; 331-stator; 332-rotor; 333-permanent magnet; 334-bearing; 340-ring seat; 341-heat insulating member; 351-stirring component; 352-heating component; 361-stator housing; 362-sealing cylinder; 363-first seal; 364-second seal; 365-second flange; 366-sixth seal; 367-seventh seal; 370-guide frame;
414-center rod; 415-support; 440-ring seat; 461-stator housing; 463-first seal; 464-second seal;
514-center rod; 515-support; 540-ring seat; 561-stator housing; 563-first seal; 564-second seal; 570-sealing ring; 571-eighth seal.

### DETAILED DESCRIPTION OF EMBODIMENTS

The specific implementations of the present application are described in detail below with reference to the drawings. It should be understood that only preferred embodiments of the present application are shown in the drawings, which do not constitute limitations on the scope of the present application. Those skilled in the art may make various obvious modifications, variations, and equivalent substitutions to the present application on the basis of the embodiments shown in the drawings, which all fall within the scope of protection of the present application.

In the following specific description of the present application, terms such as "upper" and "lower" used herein to indicate a direction and an orientation are based on orientations of the tire curing press and its components shown in the drawings for ease of description. The orientations of the tire curing press and its components shown in the drawings are usual orientations during use thereof, but do not exclude other orientations of the tire curing press and its components, for example, during transportation, etc.

### <First Embodiment>

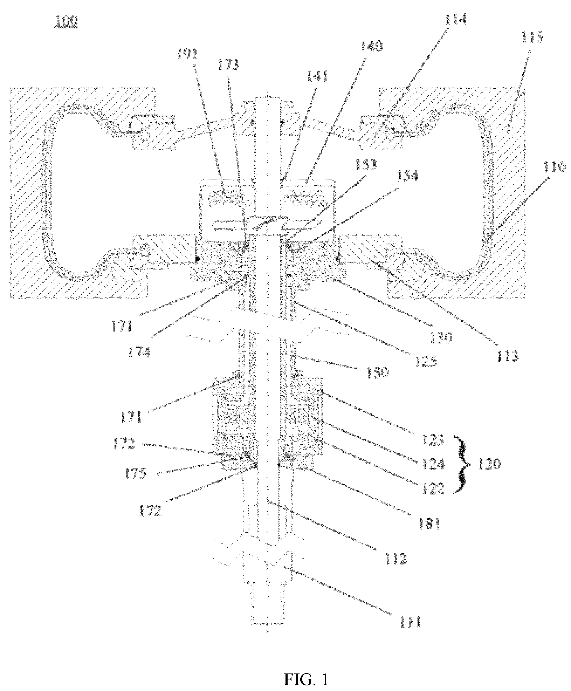

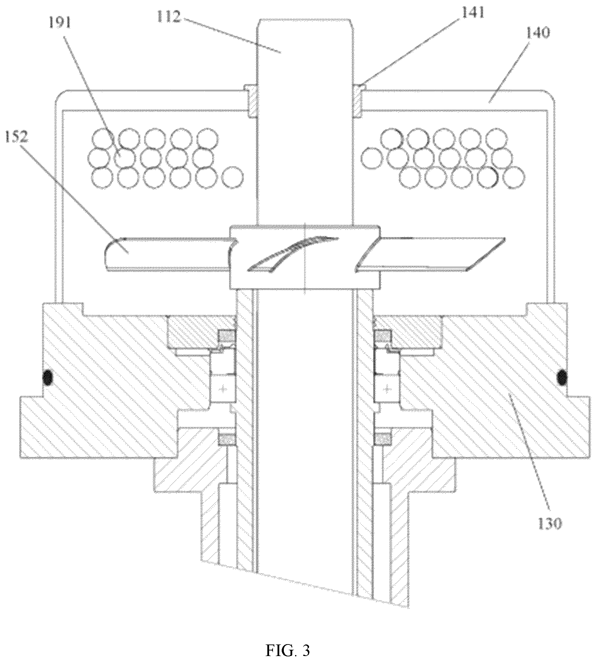

FIGS. 1-4 illustrate a tire curing press 100 according to a first embodiment of the present application. As shown in FIG. 1, the tire curing press 100 includes a curing bladder 110, where a lower flange of the curing bladder 110 is clamped by a lower clamping assembly 113, and an upper flange of the curing bladder 110 is clamped by an upper clamping assembly 114. A curing mold 115 covers at the outer side of the curing bladder 110, so that a curing chamber is formed between the curing mold 115 and the curing bladder 110, where a tire to be cured may be placed in the curing chamber.

The tire curing press 100 further includes a guide device used for opening and closing the tire curing press during the tire curing process. The guiding device includes a guide driving member 111 and a center rod 112 connected to the guide driving member 111. The guide device further includes a first fixing seat 120, a second fixing seat 130, and a rotating cylinder 150. Wherein, the first fixing seat 120 is adapted to be sleeved around a first end of the outer side of the center rod 112 and is adapted to be connected to the guide driving member 111. The second fixing seat 130 is adapted to be sleeved around a second end of the outer side of the center rod 112, where a guide frame 140 is mounted on the second fixing seat 130, a guide hole is provided on the guide frame 140, the guide hole is arranged to be coaxial with the center rod 112, and a guide member 141 is provided in the guide hole. The rotating cylinder 150 is adapted to be sleeved around the outer side of the center rod 112. The rotating cylinder 150 includes at least a body segment provided between the first fixing seat 120 and the second fixing seat 130, so that the center rod 112 is entirely in a sealed environment.

In the exemplary structure shown in FIG. 1, a ring seat connected to the inner side of the lower clamping assembly 113 functions as the second fixing seat 130. Of course, the second fixing seat 130 may alternatively be provided in other ways. For example, the second fixing seat 130 may be an additional component connected to the inner side or a lower part of the ring seat.

As shown in the drawings, the curing bladder 110, the lower clamping assembly 113, the upper clamping assembly 114, and an upper surface of the ring seat jointly define a curing medium chamber for accommodating a gas medium.

In the abovementioned embodiment, the rotating cylinder 150, the first fixing seat 120, and the second fixing seat 130 are provided on the outer side of the center rod 112, where the first fixing seat 120 and the second fixing seat 130 secures the rotating cylinder 150, and the first fixing seat 120 is provided at an end of the guide driving member 111 connected to the center rod 112, so that heat transferred from the heat source to the guide driving member 111 is insulated by the second fixing seat 130, thus protecting the guide driving member 111 from degradation in term of stability due to a high temperature. Moreover, the provision of the rotating cylinder 150 enables the center rod 112 to be entirely in a sealed environment, further improving motion stability of the center rod 112. In addition, the guide hole and the guide member 141 on the guide frame 140 function to position the center rod 112, preventing the center rod 112 from being offset during the motion, thus further improving the stability of the guide device.

Some exemplary specific embodiments of the guide driving member 111 include an oil cylinder, an electric cylinder, a water cylinder, a gas cylinder, a screw, etc. The guide member 141 may be a guide sleeve or a bearing, and in this solution, particularly, a guide copper sleeve is employed. The center rod 112 moves in the vertical direction, and the first fixing seat 120, the rotating cylinder 150, and the second fixing seat 130 are maintained in a coaxial relationship with respect to each other.

Based on the abovementioned embodiment, in some embodiments, an inner diameter of the rotating cylinder 150 is a, an outer diameter of the center rod 112 is b, and a > b. In this embodiment, the provision of the rotating cylinder 150 not only ensures that guided operation of the center rod 112 is in a sealed environment but also insulates the transfer of heat from the heat source to some extent. Moreover, there is a first gap 153 between the rotating cylinder 150 and the center rod 112, where the first gap 153 is in communication at its upper end with the curing medium chamber. In addition, as shown in FIG. 1, a second gap 154 is formed between the rotating cylinder 150 and the second fixing seat 130 (or in other words the ring seat), where the second gap 154 is also in communication at an upper end thereof with the internal chamber of the curing bladder 110,

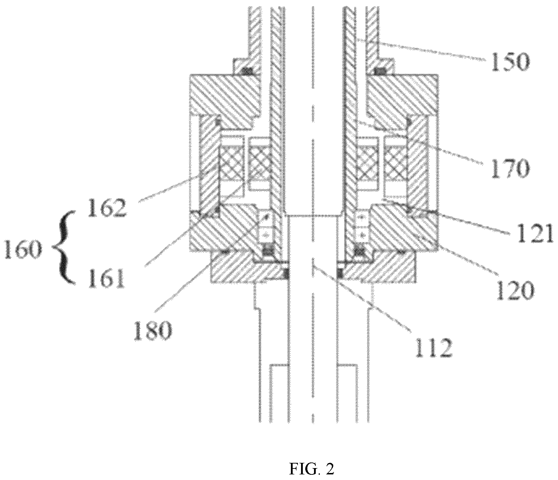

On the basis of the above embodiment, in some embodiments, a mounting groove 121 is provided on an inner wall of the first fixing seat 120, and a rotary driving member 160 includes, for example, a motor, which is provided in the mounting groove 121. It can be seen that the first fixing seat 120 also functions as a stator housing. The stator assembly of the motor includes the stator 162 and the stator housing mentioned above. As shown more clearly in FIG. 2, in a preferred structure, the stator housing includes a base 122, an end cap 123, and a housing 124 between the base 122 and the end cap 123, as shown in FIG. 1. A sealing structure is optionally provided between the base 122 and the housing 124 and between the end cap 123 and the housing 124, to improve the seal performance of an internal space of the stator housing.

A ring cylinder 125 is provided between the stator housing functioning as the first fixing seat 120 and the ring seat functioning as the second fixing seat 130, where the ring cylinder 125 is provided on the periphery of the rotating cylinder 150. The ring cylinder 125 can protect the rotating cylinder 150 and the center rod 112 therein, and can achieve sealing between the ring seat and the stator of the motor. Specifically, as shown in FIG. 1, a first seal 171 is provided between the stator housing and the ring cylinder 125 and between the ring cylinder 125 and the ring seat.

Further, a second seal 172 is provided between the stator housing and the center rod 112. A support 181 is provided below the stator housing, where the support 181 is used for supporting components such as the first fixing seat 120 and the ring cylinder 125 described above. A second seal 172 is provided between the support 181 and the base 122 of the stator housing, and additionally, the second seal 172 may also be provided between the support 181 and the center rod 112.

By means of the first seal 171 and the second seal 172, a U-shaped channel formed by the first gap 153 and the second gap 154 connected to each other at a lower end of the rotating cylinder 150 only communicates with the curing medium chamber, with the remaining part thereof being sealed. The U-shaped channel holds therein a high-temperature high-pressure gas from the curing medium chamber in the curing bladder 110.

Additionally, in some embodiments, a third seal 173 is provided at the top of the rotating cylinder 150, where the third seal 173 is provided at or near an upper end of the rotating cylinder 150 and between the rotating cylinder 150 and the ring seat (or in other words the second fixing seat 130). In this embodiment, the provision of the third seal 173 further ensures a sealing effect and a heat insulating effect. The third seal 173 can isolate a first bearing chamber that accommodates a bearing between the ring seat and the rotating cylinder 150 from a high-temperature, high-pressure environment, preventing impurities and the high-temperature, high-pressure gas from entering the first bearing chamber, thereby improving the service life of the corresponding bearing.

The tire curing press 100 is further provided with a fourth seal 174, where the fourth seal 174 is provided between an upper end of the ring cylinder 125 and the rotating cylinder 150 and can improve the seal performance of the first bearing chamber and prevent a leakage of grease in the first bearing chamber.

Further, a fifth seal 175 is provided between the stator housing, particularly the base 122 of the stator housing, and the rotating cylinder 150, where the fifth seal is used for sealing a second bearing chamber located at a lower end portion of the rotating cylinder 150 and the center rod 112, to prevent a leakage of grease in the second bearing chamber.

Additionally, in some embodiments, as shown in FIG. 2, the guide device further includes a rotary driving member 160, where the rotary driving member 160 is connected to the rotating cylinder 150 to drive rotation of the rotating cylinder 150. In this embodiment, the rotary driving member 160 drives the rotation of the rotating cylinder 150, and the rotating cylinder 150 can turbulate a heat flow along the center rod 112, to further optimize the heat insulating effect.

Furthermore, with continued reference to FIG. 2, in some embodiments, a gap is provided between the inner wall of the first fixing seat 120 and the center rod 112. The guide device further includes a transmission sleeve 170 and a support bearing 180, where the transmission sleeve 170 is provided between the first fixing seat 120 and the center rod 112, and the transmission sleeve 170 is connected to the motor and the rotating cylinder 150. There are a plurality of support bearings 180, and the plurality of support bearings 180 are respectively provided at upper and lower sides of the motor. The support bearing 180 is sleeved around the transmission sleeve 170. A fixed race of the support bearing 180 is connected to the first fixing seat 120, and a movable race of the support bearing 180 is connected to the transmission sleeve 170. The support bearing 180 is used for ensuring the stability of the motor driving the rotating cylinder 150. The transmission sleeve 170 is used for transmitting power of the motor. The rotating cylinder 150 rotates to turbulate the flow.

In the structure shown in the drawings, the transmission sleeve 170 is integrated with the rotating cylinder 150. However, in some embodiments, the transmission sleeve 170 and the rotating cylinder 150 may be independent of each other and secured to each other by a snap-fit structure.

For example, in some embodiments, one of the transmission sleeve 170 and the rotating cylinder 150 is provided with an outer tapered portion, and the other one thereof is correspondingly provided with an inner tapered portion. The outer tapered portion is engaged with the inner tapered portion. The snap-in structure includes the outer tapered portion and the inner tapered portion. When the outer tapered portion is fitted with the inner tapered portion, corresponding tooth structures engage, so as to ensure the concentricity of the transmission sleeve 170 and the rotating cylinder 150, and also to transmit power of the transmission sleeve 170 to the rotating cylinder 150. **In** some alternative embodiments, one of the transmission sleeve 170 and the rotating cylinder 150 is provided with a connection hole, and the other one thereof is correspondingly provided with a connection segment. The connection segment may be a structure such as a cylinder or a square column, and the connection segment is provided with a keyway or tooth structure. The connection hole is fitted with the connection segment. **In** other alternative embodiments, a transmission tooth may be provided on one of the transmission sleeve 170 and the rotating cylinder 150, and a matching tooth may be correspondingly provided on the other one thereof.

Furthermore, in some embodiments, the heat source 191 is mounted on the guide device, for example the heat source 191 may be located above the second fixing seat 130. The upper end of the rotating cylinder 150 passes through the second fixing seat 130, and an stirring component 152 used for turbulating heat generated by the heat source 191 is provided at the upper end of the rotating cylinder 150. More specifically, it can be seen from the drawings that the heat source 191 and the stirring component 152 are both provided in the inner space of the curing bladder 110 and are arranged in a longitudinal direction.

Exemplary specific embodiments of the stirring component 152 may be a blade, an impeller, a turbine, an auger, a plate, etc., and the provision of the stirring component 152 can further optimize a turbulating effect, thus optimizing the heat insulating effect.

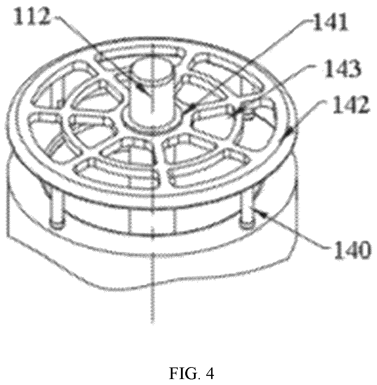

Furthermore, in some embodiments, as shown in FIG. 4, the guide frame 140 includes a mounting disk 142. The mounting disk 142 may be in the shape of a circle, a polygon, an oval, etc., while the shape thereof is not limited herein. The guide hole is provided on the mounting disk 142, and a ventilation hole 143 is provided on the mounting disk 142 to ensure that the guide frame 140 is applied for heat circulation in an environment with heat transfer.

In specific embodiments, the mounting disk 142 realizes fixed connection with the second fixing seat 130 by means of a structure such as a leg or a pad. Here, providing the fixed connection is realized, the way of the fixed connection is not limited.

### <Second Embodiment>

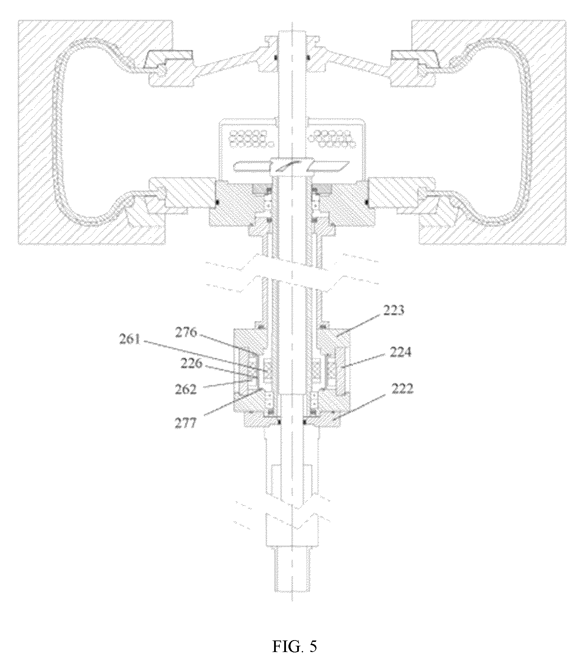

FIG. 5 illustrates a tire curing press 200 according to a second embodiment of the present application. In absence of any contrary description or conflict, the specific structure described with respect to the first embodiment also applies to the second embodiment. The structure of the second embodiment differing from the first embodiment will be specifically described below.

**In** the second embodiment, the rotary driving member, identical or similar to that in the first embodiment, includes a rotor 261 and a stator assembly, where the stator assembly includes a stator 262 provided on the periphery of the rotor 261 and facing the rotor 261. A first fixing seat of the tire curing press 200 functions as a stator housing, where the stator housing includes a base 222, an end cap 223, and a housing 224 therebetween, and the stator 262 and the stator housing jointly form the stator assembly.

**In** the second embodiment, a sealing cylinder 226 is provided between the stator assembly and the rotor. An upper end of the sealing cylinder 226 abuts against or is connected to the end cap 223 of the stator housing, and preferably, a first sealing ring 276 is provided between the upper end of the sealing cylinder 226 and the end cap 223 of the stator housing. A lower end of the sealing cylinder 226 is supported on or connected to the base 222 of the stator housing, and preferably, a second sealing ring 277 is provided between the lower end of the sealing cylinder 226 and the base 222 of the stator housing.

As such, by means of the sealing cylinder 226, the stator 262, which is typically in the form of a solenoid coil and is located on the outer side, can be further isolated from a high-temperature, high-pressure gas used for curing in the tire curing press 200. The rotor 261 is usually composed of a plurality of permanent magnets, such as loadstone and magnetic steel, and it has a stronger ability to withstand a high-temperature, high-pressure environment than that of the stator 262 formed by the solenoid coil. Therefore, even if there is a little high-temperature, high-pressure gas leaking to the position where the motor is, isolating the stator 262 by means of the sealing cylinder 226 is sufficient to ensure normal operation of the motor.

Furthermore, in this embodiment, an additional sealing shield is formed by means of the sealing cylinder 226, the first sealing ring 276, and the second sealing ring 277, and accordingly, sealing rings between the base 222 and the housing 224 and between the end cap 223 and the housing 224 may be omitted.

### <Third Embodiment>

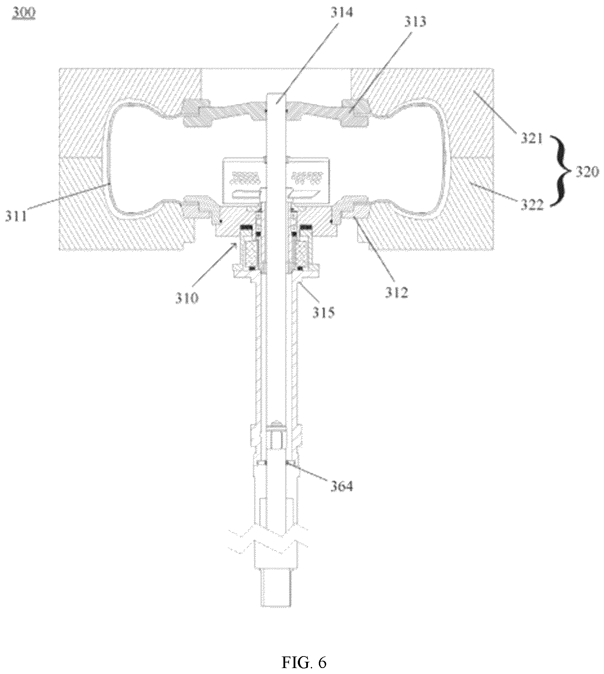

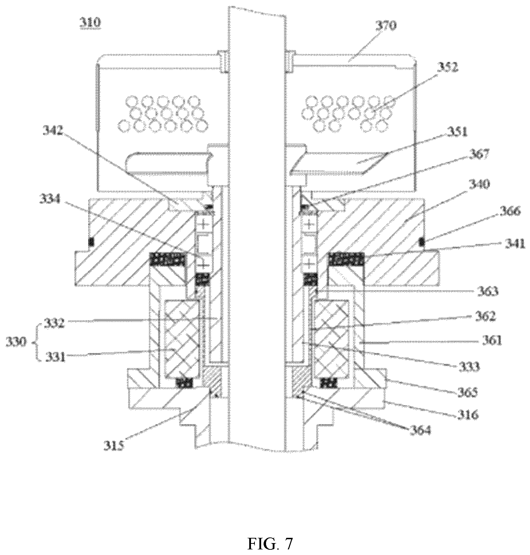

FIGS. 6 and 7 illustrate a tire curing press 300 according to a third embodiment of the present application. In absence of any contrary description or conflict, the specific structures described with respect to the first and second embodiments also apply to the third embodiment. A structure of the third embodiment differing from the first and second embodiments will be specifically described below.

FIG. 6 illustrates a schematic sectional view of the tire curing press 300 according to the present application. The tire curing press 300 includes a curing bladder 311, where a lower flange of the curing bladder 311 is clamped by a lower clamping assembly 312; and an upper flange of the curing bladder 311 is clamped by an upper clamping assembly 313. The tire curing press 300 further includes a center rod 314, where an upper end of the center rod 314 is fixedly connected to the upper clamping assembly 313, and the center rod 314 is capable of a lifting motion in a longitudinal direction relative to the lower clamping assembly 312. As such, the contraction or dilation of the curing bladder 311 can be achieved by means of the lifting motion of the center rod 314. Specifically, when the center rod 314 moves upwardly relative to the lower clamping assembly 312, the distance between the upper clamping assembly 313 and the lower clamping assembly 312 is increased, causing the curing bladder 311 to contract. When the center rod 314 moves downwardly, the distance between the upper clamping assembly 313 and the lower clamping assembly 312 is reduced, and then the gas medium is introduced into the curing bladder 311, causing the curing bladder 311 to dilate.

The tire curing press 300 further includes a curing mold 320, where the curing mold 320 covers at the outer side of the curing bladder 311 to form a curing chamber between the curing mold 320 and the curing bladder 311, and a tire to be cured may be placed in the curing chamber. During the curing process, high-pressure nitrogen is injected into the curing bladder 311, and then the nitrogen is heated, causing the curing bladder 311 to dilate and be heated. In this way, the curing bladder 311 transfers pressure and heat from the inner side of the tire, and the curing mold 320 transfers pressure and heat from the outer side of the tire. Moreover, preferably, an additional heating component is provided on the curing mold 320, such as an electric heating wire, so that as the inner side of the tire is heated by the curing bladder 311, the outer side of the tire can also be heated by the curing mold 320.

In the preferred structure shown in the figure, the curing mold 320 is a structure that can be opened and closed, that is, the curing mold includes an upper mold 321 and a lower mold 322 that are separable from each other.

The tire curing press 300 of the present application is provided with an integrated medium stirring device 310. The integrated medium stirring device 310 is supported on a support 315 of the tire curing press 300. The support 315 is preferably in the form of a support ring cylinder having an internal channel therein, where the center rod 314 can extend through the internal channel.

FIG. 7 illustrates an exemplary sectional view of the integrated medium stirring device 310, from which the specific structure of the integrated medium stirring device 310 can be seen.

The preferred structure of the integrated medium stirring device 310 shown in the figure includes a motor assembly 330, where the motor assembly 330 includes a stator 331 and a rotor 332, the stator 331 includes a bore, and the rotor 332 is at least partially positioned within the bore of the stator 331. Moreover, in the structure shown in the figure, the stator 331 is located below the bottom of a ring seat 340 and supported on the support 315, and a gap may be formed between the stator 331 and the bottom of the ring seat 340. A guide frame 370 is mounted on the ring seat 340, and the guide frame is the same as the guide frame 140 in the first embodiment.

The form of the stator 331 being supported on the support 315 is preferable. In an additional or alternative embodiment, the stator 331 may be fixedly connected to the bottom of the ring seat 340 to facilitate fixation of the stator 331.

One end of the rotor 332 is connected to an stirring component 351. One example of the stirring component 351 is a fan, and the stirring component 351 is located inside the curing bladder 311 and is capable of stirring the gas inside the curing bladder 311. The gas inside the curing bladder 311 is, for example, heated pressurized nitrogen. The integrated medium stirring device 2 further includes a heating component 352 for heating the nitrogen in the curing bladder 311. The heating component 352 may be, for example, an electric heating component. Alternatively, the heating component 352 may be an inductive heating component.

Furthermore, it can be seen that by positioning the stator 331 below the bottom of the ring seat 340, the ring seat 340 may function to insulate the stator 331 from the gas heated in the curing bladder 311.

An electromagnetic winding is provided on the inner side of the stator 331, and a magnetic field can be generated after the electromagnetic winding is energized. Correspondingly, a permanent magnet 333 is provided on a portion of the outer side of the rotor 332 facing the inner side of the stator 331, and when the electromagnetic winding of the stator 331 is energized, the magnetic field generated interacts with the permanent magnet 333 on the rotor 332, thereby causing the rotor 332 to rotate. The rotation of the rotor 332 drives the stirring component 351 to rotate, stirring the gas in the curing bladder 311, where the gas is, for example, heated high-pressure nitrogen in the curing bladder 311, etc., thereby facilitating uniform heating of the curing bladder 311.

The integrated medium stirring device 310 further includes the ring seat 340, where an end of the rotor 332 that is connected to the stirring component 351 is rotatably provided in a bore of the ring seat 340, and is connected to the stirring component 351 after passing through the bore of the ring seat 340. Preferably, a bearing 334 is provided between the ring seat 340 and the rotor 332, thereby facilitating rotation of the rotor 332 relative to the ring seat 340. The stirring component 351 and the heating component 352 are preferably mounted on the ring seat 340 and are provided in an axially spaced apart way.

Moreover, it can be seen in FIG. 7 that, in addition to being fixed to the support 315, the stator 331 may alternatively or additionally be fixed to the ring seat 340. Preferably, the stator 331 is fixedly clamped between the ring seat 340 and the support 315, and such a structure can better ensure that the stator 331 is securely positioned.

In order to protect the motor assembly 330, and particularly protect the stator 331 of the motor assembly 330, the integrated medium stirring device 32 further includes a stator housing 361, where the stator housing 361 is provided on the outer side of the stator 331 and covers the stator 331. The stator housing 361 and stator 331 jointly form a part of the stator assembly. An upper end of the stator housing 361 is fixedly connected to the ring seat 340, and a lower end thereof is detachably connected to the support 315. Preferably, a heat insulating member 341 is provided between the stator housing 361 and the ring seat 340. The heat insulating member 341 hinders heat in the curing bladder 311 from being transferred downwardly toward the support 315, which helps to reduce a heat loss of the tire curing press 300, thus improving overall heat efficiency of the tire curing press 300.

Preferably, the lower end of the housing 361 is connected to the support 315 via a flange structure, where a first flange 316 is formed at an upper end of the support 315, a second flange 365 is formed at the lower end of the housing 361, and a plurality of bolts pass through holes on the first flange 16 and the second flange 65 to fixedly connect the flanges together.

Preferably, the stator assembly further includes a sealing cylinder 362. The sealing cylinder 362 is provided between the stator 331 and the rotor 332, where an upper end thereof is connected to the ring seat 340, and a lower end thereof is fixedly connected to the support 315. Further, to improve seal performance, a first seal 363 is provided between the sealing cylinder 362 and the ring seat 340, and a second seal 364 is provided between the sealing cylinder 362 and the support 315. The second seal 364 may also be provided between the support 315 and an oil cylinder below the support, as can be seen from FIG. 6, or may be provided between the center rod 314 and the oil cylinder.

The sealing cylinder 362 may isolate the interior of the tire curing press 300 from the exterior, such that the medium inside the tire curing press 300, such as pressurized nitrogen in the curing bladder 311, is not contaminated by external air. On the other hand, the sealing cylinder 362 can prevent the internal medium of the tire curing press 300 from overflowing, thereby functioning to protect the stator 331.

In the preferred structure shown in the figure, upper and lower ends of the sealing cylinder 362 have greater thicknesses, which may facilitate mounting and sealing of the sealing cylinder 362. Moreover, a step portion is provided at the lower end of the sealing cylinder 362, which may facilitate supporting the sealing cylinder 362 on the support 315.

A bore is formed in the sealing cylinder 362 for the center rod 314 to pass through. Alternatively or additionally, the abovementioned second seal 364 may be provided at or near the lower end of the sealing cylinder 362. Such a setting can prevent the gas medium in the curing bladder 311 from flowing downwardly along a gap between the sealing cylinder 362 and the center rod 314. Further, an inlet channel and an outlet channel may be provided in the ring seat 340 for inflow and outflow of the gas medium into and out of the curing bladder 311.

It should be noted that the provision of a seal between the sealing cylinder 362 and the center rod 314 is optional. In another embodiment of the present application, no seal is provided between the sealing cylinder 362 and the center rod 314, thereby forming a gap around the center rod 314 and between the sealing cylinder and the center rod, where the gap may function as a channel for the gas medium to flow into and out of the curing bladder 311. Such a case also falls within the scope of the present application. The gap between the sealing cylinder 362 and the center rod 314 may be 1 to 10 mm.

Further optionally, a sixth seal 366 is provided on the outer surface of the ring seat 340, where the sixth seal 366 forms a sealing structure between the ring seat 340 and the lower clamping assembly 312.

Moreover, a compression ring 342 is optionally provided at the upper end of the ring seat 340, so as to form a space for accommodating the bearing between the center rod 314 and the ring seat 340. A seventh seal 367 is provided between the center rod 314 and the compression ring 342.

The proper operation of the motor assembly 330 can be better ensured by selection of the material for manufacturing the sealing cylinder 362. Specifically, the material for manufacturing the sealing cylinder 362 may be selected from carbon steel, stainless steel, ceramics, engineering plastics, and carbon fiber. Further preferably, the thickness of the sealing cylinder 362, particularly the thickness of a portion of the sealing cylinder 362 that is directly sandwiched between the stator 331 and the rotor 332, may be set to be in the range of 0.5 to 2 mm. Such a thickness of the sealing cylinder 362 can minimize influence on the operation of the motor while ensuring the heat insulating efficiency.

Returning to FIG. 6, in a specific mode of connection between the integrated medium stirring device 310 and the tire curing press 300, the integrated medium stirring device 310 is fixedly supported on the support 315, and the lower clamping assembly 312 is connected to the ring seat 340. The mode of connection between the lower clamping assembly 312 and the ring seat 340 may be any known mode, such as a threaded connection, a projecting ringgroove structure, or a snap-fit structure, etc.

Moreover, the center rod 314 extends through the integrated medium stirring device 310 and is capable of a lifting motion in a longitudinal direction relative to the integrated medium stirring device 310. A bore of the rotor 332, a bore of the stirring component 351, and a bore of the heating component 352 jointly form a bore of the integrated medium stirring device 310, and the center rod 314 extends through the bore of the integrated medium stirring device 310.

### <Fourth Embodiment>

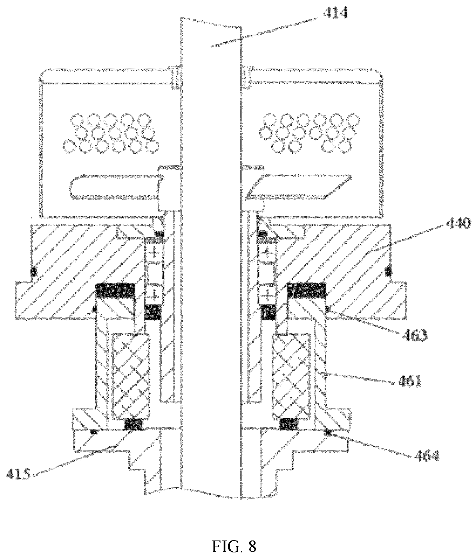

FIG. 8 illustrates an integrated medium stirring device of a tire curing press according to a fourth embodiment of the present application. In absence of a contrary description or conflict, the specific structures described with respect to the first to third embodiments also apply to the fourth embodiment. A structure of the second embodiment differing from the first to third embodiments will be specifically described below.

As shown in FIG. 8, no sealing cylinder is provided in the fifth embodiment. In this case, a first seal 463 is provided between a stator assembly and a ring seat 440, specifically between a stator housing 461 and the ring seat 440. A second seal 464 is provided between the stator assembly and a support 415, specifically between the stator housing 461 and the support 415. Alternatively, similar to that in the third embodiment, the second seal 464 may be provided between the support 415 and an oil cylinder or between a center rod 414 and the oil cylinder.

### <Fifth Embodiment>

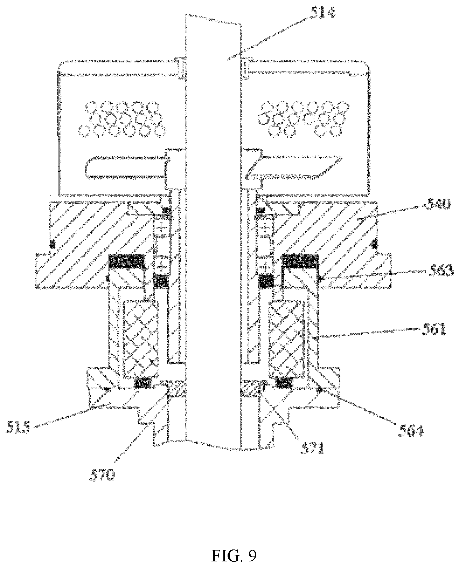

FIG. 9 illustrates an integrated medium stirring device of a tire curing press according to a fifth embodiment of the present application. In absence of a contrary description or conflict, the specific structures described with respect to the first to fourth embodiments also apply to the fifth embodiment. A structure of the fifth embodiment differing from the first to fourth embodiments will be specifically described below.

In the fifth embodiment, it includes a sealing ring 570 provided between a center rod 514 and a support 515. The sealing ring 570 is preferably provided at a top position on the support 515, to achieve sealing between the center rod 514 and the support 515. Preferably, eighth seals 571 are respectively provided on inner and outer surfaces of the sealing ring 570, where the eighth seals 571 help to enhance sealing between the sealing ring 570 and the center rod 514 and sealing between the sealing ring and the support 515.

Moreover, similar to that in the fourth embodiment, a first seal 563 is provided between a ring seat 540 and a stator housing 561. A second seal 564 is provided between the stator housing 561 and the support 515.

## Claims

1. A tire curing press, comprising:
a curing bladder;
a lower clamping assembly for clamping a lower flange of the curing bladder;
an upper clamping assembly for clamping an upper flange of the curing bladder; and
a center rod, wherein an upper end of the center rod is fixedly connected to the upper clamping assembly, and the center rod is configured to be capable of a lifting motion in a longitudinal direction relative to the lower clamping assembly;
a heating component for heating a gas;
an stirring component for stirring the gas heated in the curing bladder;
a rotary driving member comprising a stator assembly and a rotor, wherein the stator assembly comprises a bore, and a portion of the rotor is located in the bore of the stator assembly and faces an inner side of the stator assembly; and
a ring seat, wherein the lower clamping assembly is fixedly mounted on the periphery of the ring seat, and the ring seat comprises a bore;
the curing bladder, the upper clamping assembly, the lower clamping assembly, and an upper surface of the ring seat jointly define a curing medium chamber for accommodating a gas medium;
wherein it further comprises a rotating cylinder, the rotating cylinder is rotatably disposed through the bore of the ring seat, one end of the rotating cylinder projects from one side of the ring seat and is connected to the stirring component, the other end of the rotating cylinder projects from the other side of the ring seat and has the stator assembly fixed to the periphery thereof, the center rod extends through the interior of the rotating cylinder, the upper end of the center rod is fixedly connected to the upper clamping assembly, and is configured to be capable of a lifting motion in the longitudinal direction relative to the lower clamping assembly.

2. The tire curing press according to claim 1, wherein one end of the stator assembly is directly or indirectly connected to the ring seat in a sealed manner, and the other end of the stator assembly is directly or indirectly connected to an end of the center rod away from the curing medium chamber in a sealed manner.

3. The tire curing press according to claim 2, wherein the tire curing press is provided therein with: a first gap formed between the rotating cylinder and the center rod, wherein an upper end of the first gap is in communication with the curing medium chamber;
a second gap formed between the rotating cylinder and the ring seat, wherein an upper end of the second gap is in communication with the curing medium chamber, and a lower end of the second gap is in communication with a lower end of the first gap, thereby forming a U-shaped channel;
a first seal provided between the stator assembly and the ring seat; and
a second seal provided between the stator assembly and the center rod.

4. The tire curing press according to claim 3, wherein the stator assembly comprises the stator housing and a stator, the stator housing comprising a base, an end cap, and a housing between the base and the end cap;
a ring cylinder is provided between the stator housing and the ring seat, and the ring cylinder is provided on the periphery of the rotating cylinder;
the first seal is provided between an upper end of the ring cylinder and the ring seat and between a lower end of the ring cylinder and the end cap.

5. The tire curing press according to claim 4, further comprising a support, wherein the support is located below the stator housing, and the second seal is provided between the base and the support.

6. The tire curing press according to claim 1, wherein a ring cylinder is provided between the stator housing and the ring seat, the ring cylinder being provided on the periphery of the rotating cylinder; the tire curing press further comprises at least one of the following sealing structures:
a third seal provided between the ring seat and an upper end of the rotating cylinder;
a fourth seal provided between an upper end of the ring cylinder and the rotating cylinder; and
a fifth seal provided between the stator assembly and the rotating cylinder.

7. The tire curing press according to claim 1, wherein the tire curing press comprises a guide device, wherein the guide device comprises:
a guide driving member;
the center rod connected to the guide driving member;
a first fixing seat adapted to be sleeved on a first end of the outer side of the center rod and adapted to be connected to the guide driving member;
a second fixing seat adapted to be sleeved on a second end of the outer side of the center rod, wherein a guide frame is mounted on the second fixing seat, a guide hole is provided on the guide frame, the guide hole is arranged coaxially with the center rod, and a guide member is provided in the guide hole; and
the rotating cylinder.

8. The tire curing press according to claim 7, wherein the guide device further comprises a transmission sleeve and a support bearing, the transmission sleeve is provided between the first fixing seat and the center rod, the rotary driving member comprises a motor, and the transmission sleeve is connected to the motor and the rotating cylinder; there are a plurality of support bearings, the plurality of support bearings are respectively provided at upper and lower sides of the motor, the support bearing is sleeved the transmission sleeve, a fixed race of the support bearing is connected to the first fixing seat, and a movable race of the support bearing is connected to the transmission sleeve.

9. The tire curing press according to claim 7, wherein the heating component is positioned above the second fixing seat; an upper end of the rotating cylinder passes through the second fixing seat, and the stirring component is provided at the upper end of the rotating cylinder, for turbulating heat generated by the heating component.

10. The tire curing press according to claim 1, wherein the tire curing press comprises an integrated medium stirring device supported on a support of the tire curing press, the integrated medium stirring device comprising the heating component, the stirring component, and the rotary driving member, wherein one end of the rotor is rotatably provided in the bore of the ring seat and is fixedly connected to the stirring component through the bore of the ring seat, and the heating component and the stirring component are mounted on the ring seat; the stator assembly is fixedly provided on at least one of the support and the ring seat, and the stator assembly is positioned below the bottom of the ring seat, thereby isolating the stator assembly from the heated gas via the ring seat;
preferably, a bearing is provided between the rotor and the ring seat.

11. The tire curing press according to claim 10, wherein the integrated medium stirring device further comprises a stator housing provided on the outer side of the stator, and preferably, a heat insulating member is provided between the stator housing and the ring seat.

12. The tire curing press according to claim 1 or 10, wherein the tire curing press further comprises a sealing cylinder located between the rotor and the stator assembly of the motor assembly,
wherein preferably, the thickness of at least a portion of the sealing cylinder sandwiched between the rotor and the stator is in the range of 0.5 to 2 mm.

13. The tire curing press according to claim 12, wherein a first seal is provided between an upper end of the sealing cylinder and the ring seat, and a second seal is provided between a lower end of the sealing cylinder and the support;
preferably, a compression ring is provided at an upper end of the ring seat, the tire curing press further comprises: a sixth seal provided between the outer surface of the ring seat and the lower clamping assembly; and/or a seventh seal provided between the center rod and the compression ring.

14. The tire curing press according to claim 11, wherein a first seal is provided between the stator housing and the ring seat, and a second seal is provided between the stator housing and the support.

15. The tire curing press according to claim 11, wherein a first seal is provided between the stator housing and the ring seat; and
a sealing ring is provided between a top end of the support and the center rod, and an eighth seal is provided between the inner surface of the sealing ring and the center rod and/or between the outer surface of the sealing ring and the support.
